# EUROPÄISCHE PATENTSCHRIFT

(11) **EP 4 568 816 B1**
(45) Veröffentlichungstag und Bekanntmachung des Hinweises auf die Patenterteilung: **08.04.2026**
(21) Anmeldenummer: 23755024.9
(22) Anmeldetag: 02.08.2023
(51) Int. Cl.: B26D 3/08, B26D 5/00, B26D 9/00

(54) **VERFAHREN ZUR BEARBEITUNG EINER BEDRUCKTEN BAHN UND ANLAGE HIERFÜR**
METHOD FOR PROCESSING A PRINTED WEB AND SYSTEM FOR CARRYING OUT THE METHOD
PROCÉDÉ DE TRAITEMENT D'UNE BANDE IMPRIMÉE ET SYSTÈME POUR LA MISE EN OEUVRE DU PROCÉDÉ

(30) Priorität: 09.08.2022 DE 102022208283
(43) Veröffentlichungstag der Anmeldung: 18.06.2025
(73) Patentinhaber: BHS Corrugated Maschinen- und Anlagenbau GmbH, 92729 Weiherhammer (DE)
(72) Erfinder: RUHLAND, Karl, 92536 Pfreimd (DE)
(74) Vertreter: FDST Patentanwälte
(86) Internationale Anmeldenummer: PCT/EP2023/071464
(87) Internationale Veröffentlichungsnummer: WO 2024/033191

(56) Entgegenhaltungen:
- EP-B1- 3 337 666
- EP-B1- 3 360 639
- JP-A- 2019 063 966

## Beschreibung

Die Erfindung betrifft ein Verfahren zur Bearbeitung einer Bahn, welche mit einem Druckbild bedruckt ist, d.h. einer bedruckten Bahn. Weiter betrifft die Erfindung eine entsprechende Anlage hierfür.

Ein Beispiel für eine Bahn ist eine Wellpappenbahn. Eine solche wird aus mehreren Papierlagen zusammengesetzt und gegebenenfalls zusätzlich bedruckt. Die Wellpappenbahn wird mit einer Wellpappenanlage hergestellt, an deren Ende regelmäßig eine Konfektionierung der Wellpappenbahn in einzelne Nutzen erfolgt, welche dann weiter zu einzelnen Bögen, z.B. Faltschachteln, zerteilt werden. Hierzu wird die Wellpappenbahn typischerweise längs- und quergeschnitten und dadurch in einzelne Nutzen und Bögen unterteilt. Gegebenenfalls wird die Wellpappenbahn auch noch längs und/oder quer gerillt.

Häufig sollen die Bögen bedruckt sein, z.B. mit einem Bild, einem Logo, einer Verzierung oder dergleichen. Ein entsprechende Druckbild kann entweder nach dem Längs- und Querschneiden auf die einzelnen Bögen aufgedruckt werden oder bereits davor. In letzterem Fall wird das Druckbild als "Preprint" bezeichnet. Beim Preprint ist die Maßhaltigkeit der Wellpappenbahn problematisch, denn eine Veränderung der Abmessungen der Wellpappenbahn zwischen der Bedruckung und dem Längs- und Querschneiden führt regelmäßig dazu, dass die beim Längs- und Querschneiden erzeugten Schnitte nicht optimal mit dem Druck übereinstimmen. Dasselbe Problem besteht beim Rillen.

In der EP 3 337 666 B1 wird ein Drucksystem beschrieben, bei welchem auf eine einzelne Substratbahn einerseits Grafiken gedruckt werden, für mehrere unterschiedliche Anordnungen von Wellpappschachteln, die mit der Bahn auszukleiden sind, und andererseits maschinenlesbare Bilder, die Wellpappenanlagensteuerinformationen zum Herstellen der mehreren unterschiedlichen Anordnungen von Schachteln darstellen. Die Wellpappenanlagensteuerinformationen beinhalten Passmarken, die Positionsinformationen darstellen, die zum dynamischen Anpassen einer Position einer Wellpappe und/oder von Schneide- und Faltwerkzeugen für jede der unterschiedlichen Anordnungen zu verwenden sind.

Die EP 3 360 639 B1 beschreibt ein Verfahren zur Herstellung von Zuschnitten aus Wellpappe umfassend das Schneiden einer Wellpappenbahn mit mindestens einem formungebundenen, variablen Schneidwerkzeug, wobei mit dem Schneidwerkzeug Schnittlinien in die Materialbahn eingebracht werden, welche die Kontur eines Zuschnitts erzeugen. Eine Planungseinheit plant die Lage der Zuschnitte in der Wellpappenbahn, wobei das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann.

Vor diesem Hintergrund ist es eine Aufgabe der Erfindung, die Bearbeitung einer bedruckten Bahn zu verbessern, insbesondere soll das Schneiden und/oder Rillen einer bedruckten Bahn, insbesondere Wellpappenbahn, verbessert werden. Hierzu sollen ein entsprechend geeignetes Verfahren und eine Anlage angegeben werden.

Die Aufgabe wird erfindungsgemäß gelöst durch ein Verfahren mit den Merkmalen des Anspruchs 1 sowie durch eine Anlage mit den Merkmalen gemäß Anspruch 10. Vorteilhafte Ausgestaltungen, Weiterbildungen und Varianten sind Gegenstand der Unteransprüche. Die Ausführungen im Zusammenhang mit dem Verfahren gelten sinngemäß auch für die Anlage und umgekehrt. Für die Anlage ergeben sich vorteilhafte Ausgestaltungen dadurch, dass diese ausgebildet ist, das nachfolgend beschriebene Verfahren, speziell einen oder mehrere von dessen Schritten, auszuführen. Hierzu weist die Anlage insbesondere eine Steuereinheit auf, welche hierzu entsprechend ausgebildet ist.

Das erfindungsgemäße Verfahren dient zur Bearbeitung einer Bahn, welche mit einem Druckbild bedruckt ist. Das Bedrucken erfolgt insbesondere mit einer Druckmaschine und ist selbst nicht zwingend ein Teil des hier beschriebenen Verfahrens. Das Druckbild umfasst insbesondere alles, was auf die Bahn aufgedruckt ist (z.B. Bilder, Logos, Verzierungen, Schriftzüge etc. für die einzelnen Nutzen oder Bögen und/oder Steuercodes, Justiermarken etc. für die Anlage). Das Bedrucken ist in einer geeigneten Ausgestaltung ein Teil des hier beschriebenen Verfahrens, dies ist jedoch nicht zwingend. In einer geeigneten Ausgestaltung erfolgt das Bedrucken inline mit der Bearbeitung. Die Bahn ist insbesondere aus Papier hergestellt und entweder einlagig aus nur einer einzelnen Papierlage oder mehrlagig aus mehreren Papierlagen. Vorzugsweise ist die Bahn eine Wellpappenbahn und somit mehrlagig. Die Bearbeitung erfolgt allgemein durch eine Anlage, vorzugsweise durch eine Wellpappenanlage, wovon nachfolgend ohne Beschränkung der Allgemeinheit ausgegangen wird. Die Bearbeitung erfolgt nach dem Aufdrucken des Druckbilds, d.h. bei der nachfolgend beschriebenen Bearbeitung liegt ein Preprint vor, insbesondere wird das Druckbild auf eine einzelne Papierlage aufgedruckt noch bevor diese in der Wellpappenanlage mit weiteren Papierlagen zur Wellpappenbahn verbunden wird.

Die Bahn wird einer Schneid-/Rilleinheit der Anlage zugeführt und mittels der Schneid-/Rilleinheit wird die Bahn an einer Anzahl von Bearbeitungspositionen (d.h. Schnitt- und/oder Rillpositionen) in Längsrichtung bearbeitet. Unter Schneid-/Rilleinheit wird insbesondere eine Schneid- und/oder Rilleinheit verstanden, d.h. eine Einheit welche entweder zum Schneiden der Bahn oder zum Rillen der Bahn ausgebildet ist oder beides. Entsprechend bringt die Schneid-/Rilleinheit in die Bahn einen oder mehrere Schnitte und/oder Rillen ein, speziell Längsschnitte und/oder Längsrillen, da die Bearbeitung in Längsrichtung erfolgt. Nachfolgend wird ohne Beschränkung der Allgemeinheit von einer Schneid- und Rilleinheit ausgegangen, mit welcher die Bahn sowohl geschnitten als auch gerillt wird. Die Längsrichtung entspricht einer Förderrichtung der Bahn durch die Anlage. Die Bearbeitungspositionen sind entsprechend diejenigen Positionen entlang der Bahn, an welchen von der Schneid-/Rilleinheit ein oder mehrere Schnitte und/oder Rillen eingebracht werden. Die Schnitte und/oder Rillen dienen insbesondere zur Konfektionierung der Wellpappenbahn in einzelne Nutzen und/oder zur Ausbildung von Bruch-, Falz- oder Knickkanten der Nutzen oder der späteren Bögen, z.B. um diese jeweils zu einer Schachtel, Box oder ähnlichem zu formen. Das Einbringen von Schnitten und/oder Rillen und somit die Bearbeitung durch die Schneid-/Rilleinheit wird auch als "Zuschneiden" bezeichnet, die entsprechenden Bearbeitungspositionen werden auch als "Zuschnitt" bezeichnet.

In einer geeigneten Ausgestaltung ist Schneid-/Rilleinheit stromab eines sogenannten Double-Facers der Anlage angeordnet. Im Double-Facer werden mehrere Zwischenprodukte für eine Wellpappenbahn zur tatsächlichen Wellpappenbahn zusammengesetzt. Der Double-Facer markiert insbesondere auch das Ende eines sogenannten "Wet Ends" der Anlage (und gehört noch zu diesem), woran sich ein sogenanntes "Dry End" anschließt, mit welchem eine Konfektionierung der Wellpappenbahn insbesondere in einzelne Nutzen und anschließend in einzelne Bögen erfolgt. Die Schneid-/Rilleinheit ist insbesondere ein Teil des Dry Ends der Anlage. Geeigneterweise wird die Bahn mit der Schneid-/Rilleinheit sogar in mehrere voneinander getrennte Teilbahnen (d.h. Nutzen) zerschnitten (in Längsrichtung). Die Schneid-/Rilleinheit wird daher auch als Längsschneider bezeichnet. Die Teilbahnen müssen nicht zwingend gleichartig sein, sondern können sich auch voneinander unterscheiden, insbesondere auch hinsichtlich des Druckbilds. Stromab der Schneid-/Rilleinheit weist die Anlage geeigneterweise einen Querschneider auf, welcher die Teilbahnen in Querrichtung (d.h. senkrecht zur Längsrichtung) zerschneidet und damit insbesondere in einzelne Bögen unterteilt. Optional ist zwischen Schneid-/Rilleinheit und Querschneider ein Aufteiler angeordnet. Weiter optional ist zwischen dem Double-Facer und der Schneid-/Rilleinheit ein Kurzquerschneider angeordnet, welcher wie der Querschneider die Bahn in Querrichtung zerschneidet, jedoch mit dem Ziel, Ausschuss oder nicht benötigte Zwischenstücke der Bahn auszusortieren.

Stromauf der Schneid-/Rilleinheit weist die Bahn eine Ist-Breite auf, kurz auch lediglich als Breite bezeichnet. Die Ist-Breite ist die tatsächliche Breite der Bahn und wird in Querrichtung gemessen. Im Rahmen des Verfahrens wird ein Ist-Maß für die Breite gemessen und die Schneid-/Rilleinheit wird abhängig vom Ist-Maß und einem Soll-Maß für die Breite derart eingestellt, dass die Bearbeitungspositionen an das Druckbild angepasst werden. In einer geeigneten Ausgestaltung wird hierbei das Ist-Maß für die Breite gemessen und aus diesem zusammen mit einem Soll-Maß ein Skalierungsfaktor ermittelt wird, um die Bearbeitungspositionen an die Breite anzupassen. Grundsätzlich ist es vorteilhaft, direkt die Breite zu messen, sodass das Ist-Maß identisch zur Ist-Breite ist. Ebenso geeignet als Ist-Maß sind aber auch andere Maße, insbesondere ein Abstand zwischen zwei Druckmerkmalen des Druckbilds oder generell ein Abstand irgendwelcher Merkmale der Bahn. Dabei ist der Abstand in Querrichtung gemessen und entspricht somit einem Teil der Breite. Wesentlich ist, dass, sobald die Breite variiert, prinzipbedingt auch das Ist-Maß variiert. Damit ist durch die Messung des Ist-Maßes eine Variation der Ist-Breite erkennbar.

Vorliegend wird nun die Schneid-/Rilleinheit abhängig vom Ist-Maß und vom Soll-Maß derart eingestellt, dass die Bearbeitungspositionen an das Druckbild angepasst werden. In einer geeigneten Ausgestaltung wird genauer gesagt die Schneid-/Rilleinheit abhängig vom oben erwähnten Skalierungsfaktor derart eingestellt, dass die Bearbeitungspositionen an das Druckbild angepasst werden. Die Schneid-/Rilleinheit ist demnach einstellbar und wird vorteilhaft automatisch derart abhängig von der Ist-Breite (mittels des Ist-Maßes) eingestellt, dass die Schnitte und/oder Rillen immer exakt zum Druckbild passen. Hierzu werden insbesondere die Bearbeitungspositionen, d.h. das Layout der Schnitte und/oder Rillen, mit dem Skalierungsfaktor skaliert. Eine Variation der Ist-Breite und damit eine eigentlich ungewollte Skalierung des Druckbilds wird demnach durch eine entsprechende Skalierung der Schneid-/Rilleinheit kompensiert. Ein Kerngedanke der Erfindung ist demnach insbesondere, dass die Bearbeitungspositionen der Schneid-/Rilleinheit an das tatsächliche Druckbild angepasst werden, sodass die resultierenden Schnitte und/oder Rillen besser mit dem tatsächlichen Druckbild übereinstimmen. Mit anderen Worten: der Zuschnitt wird skaliert und dadurch an die tatsächlichen Abmessungen des Druckbilds angepasst. Dabei wird eine sich ergebende Abweichung der tatsächlichen Abmessungen der Nutzen/Bögen von dem vorgegebenen Soll-Maß, insbesondere aus Auftragsdaten, akzeptiert. Dies steht im Gegensatz zum umgekehrten Ansatz einer Anpassung des Druckbilds an feststehende Bearbeitungspositionen, d.h. einer Positionierung der Schnitte und/oder Rillen exakt wie in den Auftragsdaten vorgegeben (eine solche Regelung durch Skalierung des Druckbilds ist zusätzlich allerdings vorteilhaft, wie weiter unten noch beschrieben ist). In diesem Fall bleibt zwar das Soll-Maß erhalten, jedoch mit dem Nachteil eines nicht optimal positionierten Druckbilds, falls sich die Abmessungen der Bahn ändern. Speziell passen dann vor allem Schnitte gemäß äußeren Schnittmaßen regelmäßig nicht mehr zum Druckbild. Beispielsweise wird die Bahn mit der Schneid-/Rilleinheit in fünf gleichartige Teilbahnen zerteilt, d.h. das Druckbild weist in Querrichtung nebeneinander fünf gleichartige Bilder auf, welche entsprechend voneinander zu trennen sind und in den Auftragsdaten ist als Soll-Maß eine bestimmte Breite vorgegeben. Auf ihrem Lauf zur Schneid-/Rilleinheit erfährt die Bahn eine unerwartete Dimensionsänderung, z.B. schrumpft die Bahn weniger als erwartet, und weist nun eine Ist-Breite auf, welche größer ist als eine Soll-Breite, welche identisch zum Soll-Maß ist oder sich aus dem Soll-Maß ergibt (und gegebenenfalls einer antizipierten Dimensionsänderung, welche aber tatsächlich nicht erfolgt). Beim Zerteilen führt dies dazu, dass Teile des Bildes der einen Teilbahn auf der benachbarten Teilbahn liegen. Betrachtet man z.B. einen fertig zu einer Faltschachtel geformten, einzelnen Bogen, so wirkt das Druckbild entsprechend verschoben relativ zu den Kanten und Rändern der Faltschachtel, d.h. Bildkante und Schnittkante passen nicht zusammen. Da die Bahn typsicherweise mittig ausgerichtet in die Schneid-Rilleinheit geführt wird, wächst der entsprechende Fehler in Querrichtung nach außen hin an.

Im Gegensatz zur eingangs genannten EP 3 337 666 B1 erfolgt demnach vorliegend eine echte Skalierung der Bearbeitungspositionen und der damit eingebrachten Schnitte und/oder Rillen, d.h. die tatsächlichen Abmessungen der Nutzen ändern sich. Dagegen erfolgt in der EP 3 337 666 B1 lediglich eine Positionierung der Werkzeuge relativ zum Druckbild oder zu entsprechenden Marken, um eine diesbezügliche Abweichung auszugleichen, eine Skalierung des Werkzeugs selbst wird jedoch nicht vorgenommen. Somit wird lediglich eine Translation (Verrutschen) ausgeglichen, jedoch keine Skalierung (Schrumpfung) der Bahn und des Druckbilds.

In der ebenfalls eingangs genannten EP 3 360 639 B1 kann die Bahn sowohl vor oder nach dem Schneiden bedruckt werden. Die Schneidwerkzeuge werden dann gemäß der zu erwartenden Schrumpfung so eingestellt, dass der finale Wellpappenbogen nach Abschluss sämtlicher Schrumpfvorgänge die gewünschten Abmessungen aufweist. Der Zuschnitt wird also an die antizipierten Schrumpfvorgänge angepasst. Demgegenüber wird vorliegend der Zuschnitt an die tatsächlichen Schrumpfvorgänge derart angepasst, dass das finale Endmaß (Soll-Maß) unter Umständen nicht korrekt eingehalten wird, sondern dass der Zuschnitt auf das Druckbild angepasst wird, sodass der Abstand von Bildkante zu Schnittkante übereinstimmt.

Zusätzlich zur Anpassung der Bearbeitungspositionen an das Druckbild ist auch vorliegend eine Berücksichtigung der antizipierten Schrumpfvorgänge, allgemein Dimensionsänderung der Bahn, vorteilhaft. Entsprechend wird bei dem Verfahren eine Dimensionsänderung der Bahn bei deren Verarbeitung im Voraus abgeschätzt (antizipiert) und dadurch berücksichtigt, dass das Druckbild mit der Druckmaschine skaliert, insbesondere vergrößert, aufgedruckt wird, sodass durch die Anpassung der Bearbeitungspositionen an das Druckbild eine Variation der abgeschätzten Dimensionsänderung ausgeglichen wird. In diesem Fall ist das Bedrucken insbesondere ein Teil des hier beschriebenen Verfahrens. Die abgeschätzte Dimensionsänderung ist vor allem eine erwartete Dimensionsänderung, welche im weiteren Lauf der Bahn durch die Anlage tatsächlich nicht zwingend vollständig passiert. Entsprechend ergeben sich regelmäßig Variationen gegenüber der abgeschätzten Dimensionsänderung. Das hier beschriebene Verfahren enthält somit vorteilhaft zwei Ausgleichsmechanismen für etwaige Dimensionsänderungen der Bahn, nämlich einerseits für eine abgeschätzte Dimensionsänderung und andererseits für eine tatsächliche Dimensionsänderung, speziell eine Variation (oder Abweichung) gegenüber der abgeschätzten Dimensionsänderung. Erstens wird das Druckbild selbst von vornherein abhängig von der antizipierten Dimensionsänderung skaliert, z.B. werden Soll-Maße des Druckbilds mit einem entsprechenden Skalierungsfaktor multipliziert. Die antizipierte Dimensionsänderung beruht insbesondere auf Erfahrungswerten, welche insbesondere vom konkreten Auftrag und dem verwendeten Papier abhängen. Die antizipierte Dimensionsänderung berücksichtigt jedoch regelmäßig keine Variationen im Betrieb, d.h. keine dynamische Dimensionsänderung, welche sich z.B. durch eine variierende Bahngeschwindigkeit ergibt oder durch Abweichungen beim Trocknen oder Befeuchten der Bahn. Speziell eine solche Dimensionsänderung wird nun durch das hier beschriebene Verfahren berücksichtigt, denn mit der Messung des Ist-Maßes wird genau eine solche Dimensionsänderung erfasst und dann durch Skalierung der Bearbeitungspositionen dynamisch und vorzugsweise in Echtzeit und insbesondere automatisch kompensiert. Damit ist insgesamt eine zweistufige Korrektur realisiert, bei welcher in einer ersten Stufe eine erste, grobe, statische Korrektur erfolgt, indem das Druckbild an die antizipierte Dimensionsänderung angepasst wird, insbesondere im Vorfeld, und dann in einer zweiten Stufe eine zweite, feine, dynamische Korrektur, indem die Bearbeitungspositionen an das Druckbild angepasst werden. Dabei erfolgt die Anpassung an das Druckbild mittelbar über die Messung des Ist-Maßes. In der ersten Stufe wird somit mit der Skalierung des Druckbilds insbesondere ein Offset eingestellt, um welchen herum dann mit der Skalierung der Schneid-Rilleinheit in der zweiten Stufe dynamisch geregelt wird.

Alternativ oder zusätzlich wird mit einem weiteren Ausgleichsmechanismus eine Skalierung des Druckbilds abhängig vom Ist-Maß auf das Soll-Maß geregelt, sodass das Druckbild auf das Soll-Maß angepasst wird (Regelung durch Skalierung des Druckbilds). Eine solche Regelung erfolgt insbesondere bevor die Bahn der Schneid-/Rilleinheit zugeführt wird. Dies ist besonders vorteilhaft in einem Inline-Betrieb, bei welchem eine Druckmaschine und eine Wellpappenanlage gemeinsam inline betrieben werden. Dabei ist die Druckmaschine insbesondere stromauf der Wellpappenanlage angeordnet oder stromauf der Schneid-/Rilleinheit in die Wellpappenanlage integriert. Auch hier ist das Bedrucken insbesondere ein Teil des hier beschriebenen Verfahrens. Nachteilig ist dabei, dass das Druckbild stromab der Druckmaschine bis zur Messung der Ist-Breite nicht weiter durch Skalierung des Druckbilds beeinflussbar und korrigierbar ist. Eine weitere Korrekturen erfolgt aber vorteilhaft durch die bereits beschriebene Einstellung der Schneid-/Rilleinheit.

Eine Dimensionsänderung der Bahn ergibt sich im Betrieb insbesondere durch eine oder mehrere Befeuchtungen und/oder Trocknungen der Bahn innerhalb der Anlage. Durch Feuchtigkeitszufuhr und -entzug dehnt sich die Bahn aus oder schrumpft. Im Dry End ergibt sich relativ zum Wet End regelmäßig eine Schrumpfung, welche insbesondere abhängig ist von der Bahngeschwindigkeit und somit der Zeit, welche die Bahn benötigt, um die Schneid-/Rilleinheit zu erreichen und während welcher die Bahn Feuchtigkeit an die Umgebung abgibt.

Der Skalierungsfaktor wird aus dem Ist-Maß und dem Soll-Maß gebildet, z.B. einfach als Verhältnis von Ist-Maß zu Soll-Maß oder auf andere, geeignete Weise. Je nachdem, wie das Ist-Maß und das Soll-Maß definiert sind, ist zuvor unter Umständen eine Umrechnung erforderlich. Beispielsweise ist das Ist-Maß die Breite der gesamten Bahn und das Soll-Maß die Breite einer Teilbahn, dann muss das Ist-Maß zuerst durch die Anzahl der Teilbahnen dividiert werden oder umgekehrt das Soll-Maß mit der Anzahl der Teilbahnen multipliziert werden. In einem anderen Beispiel ist das Ist-Maß der Abstand zwischen zwei Druckmerkmalen, dann wird beispielsweise das Ist-Maß anhand der Kenntnis (aus den Auftragsdaten) der Position der Druckmerkmale auf die Breite der Bahn umgerechnet und dann ausgehend hiervon wie im vorstehenden Beispiel verfahren. Das Soll-Maß ist insbesondere den Auftragsdaten zur Bearbeitung der Bahn entnommen und typischerweise vom Kunden vorgegeben. Das Soll-Maß ist ein Maß dafür, welche Abmessungen die einzelnen Nutzen/Bögen am Ende aufweisen sollen, z.B. einfach die Summe der Breiten der Teilbahnen, falls das Ist-Maß einfach die Breite der gesamten Bahn ist. Das Soll-Maß gibt insbesondere auch die Bearbeitungspositionen vor, welche nun in dem hier beschriebenen Verfahren skaliert werden, um an das tatsächliche Druckbild angepasst zu werden.

Für eine möglichst optimale Anpassung der Bearbeitungspositionen an das Druckbild wird das Ist-Maß möglichst nah an der Schneid-/Rilleinheit gemessen. In einer geeigneten Ausgestaltung wird das Ist-Maß höchstens 50 m, höchstens 40 m, höchstens 30 m, höchstens 20 m oder höchstens 10 m, bevorzugterweise höchstens 1 m, stromauf der Schneid-/Rilleinheit gemessen. Auf diese Weise werden etwaige Dimensionsänderungen möglichst vollumfänglich umfasst, sodass die Anpassung an das tatsächliche Druckbild besonders genau ist.

Wie bereits angedeutet, sind verschiedene Ausgestaltungen für das Ist-Maß möglich und geeignet, wesentlich ist, dass dieses Rückschlüsse auf die Ist-Breite und somit auf die Abmessungen des tatsächlichen Druckbilds zulässt.

**In** einer ersten geeigneten Ausgestaltung ist das Ist-Maß einfach die Ist-Breite, wie oben bereits beschrieben. Das Ist-Maß wird beispielsweise mit einer Bahnbreiten- oder Bahnkantenerkennung gemessen, hierzu weist die Anlage eine entsprechende Sensoreinheit auf. Besonders vorteilhaft ist eine Ausgestaltung, bei welcher die Bahn zumindest zwei Lagen aufweist, welche unterschiedlich breit sind, sodass durch die Messung der jeweiligen Breite der beiden Lagen und deren Vergleich miteinander die Ist-Breite der Bahn und damit die Dimensionsänderung bestimmt wird.

In einer zweiten geeigneten Ausgestaltung ist das Ist-Maß ein Abstand zwischen zwei Druckmerkmalen des Druckbildes. In dieser Ausgestaltung wird demnach direkt das Druckbild analysiert, um eine etwaige Dimensionsänderung der Bahn und des Druckbilds zu erkennen. Welche Druckmerkmale konkret verwendet werden, ist zunächst nebensächlich. Jedoch ist es vorteilhaft, wenn diese entlang der Breite der Bahn möglichst weit auseinanderliegen, d.h. dass zwischen den zwei Druckmerkmalen in Querrichtung ein möglichst großer Abstand liegt. Auf diese Weise wird sichergestellt, dass bei der Messung des Ist-Maßes eine ausreichende Auflösung vorliegt, um die typischerweise geringen Dimensionsänderungen zu erkennen. Die antizipierte Dimensionsänderung beträgt regelmäßig etwa 0,7 %, deren Variation im Betrieb ist dann geringer und beträgt regelmäßig höchstens 0,3 % (in beide Richtungen, d.h. +/-0,3 %), insbesondere etwa 0,2 %. Bei einer Bahnbreite von z.B. 2800 mm sind dies nur etwa 5 bis 6 mm, d.h. ausgehend von der Mitte der Bahn zu beiden Seiten je maximal 3 mm. Entsprechend ist zwischen den zwei Druckmerkmalen zweckmäßigerweise ein Abstand ausgebildet, welcher wenigstens 50 % der Breite der Bahn entspricht. Damit liegen die zwei Druckmerkmale insbesondere regelmäßig auf unterschiedlichen Teilbahnen, vorzugsweise auf den beiden äußersten Teilbahnen, d.h. einmal auf einer Bedienseite der Anlage und einmal auf einer Antriebsseite der Anlage. Allzu kleine Abstände sind je nach Messauflösung ungeeignet.

Als Druckmerkmale eigenen sich grundsätzlich alle Merkmale, welche in dem Druckbild vorhanden sind. Geeignete Druckmerkmale sind Längslinien (z.B. für eine Bahnkantenmessung), Logos, Bilder oder Bildelemente (z.B. Kanten, Ränder), Codes (z.B. QR- oder Bar-Codes) entweder als Teil der Bedruckung der Nutzen/Bögen und/oder zur Steuerung der Anlage (sogenannte Steuercodes). Besonders geeignet ist die Verwendung von solchen Druckmerkmalen, welche bereits ohnehin vorhanden sind und dann nicht extra zusätzlich aufgedruckt werden müssen. Als Druckmerkmale sind beispielsweise Steuercodes für den nachfolgenden Querschneider besonders geeignet. Diese Steuercodes dienen insbesondere dazu, den Querschneider zu aktivieren und dadurch einen Querschnitt an einer bestimmten Position relativ zum Steuercode zu erzeugen.

Das Ist-Maß wird in einer vorteilhaften Ausgestaltung mittels zweier Sensoren bestimmt, welche zugleich auch die Schneid-/Rilleinheit insgesamt relativ zum Bahnlauf in die Schneid-/Rilleinheit einstellen. Der Bahnlauf bezeichnet insbesondere die Position der Bahn relativ zur Querrichtung. Die beiden Sensoren sind Teil einer Sensoreinheit, welche wiederum ein Teil der Anlage ist. Die Bahn läuft nicht zwingend an einer bestimmten Stelle in die Schneid-/Rilleinheit ein, sondern kann in Querrichtung verschoben sein, je nachdem, wie die Bahn der Anlage zugeführt wird. Besonders dann, wenn die Anlage eine Bahn bearbeitet, deren Breite geringer ist als eine maximale Breite, welche die Anlage bearbeiten kann, kann der Bahnlauf mittig oder näher an der Bedienseite oder näher an der Antriebsseite der Anlage erfolgen. Entsprechend ist eine Nachführung der Schneid-/Rilleinheit erforderlich, um die Bearbeitungspositionen insgesamt und zunächst unabhängig von einer Dimensionsänderung an den generellen Bahnlauf anzupassen. Hierfür weist die Anlage die genannten zwei Sensoren auf, mit welchen der Bahnlauf gemessen wird, um dann abhängig davon, die Schneid-Rilleinheit in Querrichtung korrekt zu positionieren. Mit diesen zwei Sensoren wird nun zusätzlich auch das Ist-Maß gemessen. Entsprechend sind die Sensoren gegebenenfalls geeignet ausgebildet, z.B. zur Erkennung der genannten Druckmerkmale.

Die genaue Ausgestaltung der Sensoreinheit und deren Sensoren und auf welche Weise die Druckmerkmale (oder die Breite der Bahn) erkannt werden, ist für das hier beschriebene Verfahren von untergeordneter Bedeutung, wichtig ist, dass das Ist-Maß messbar ist, wie auch immer dieses definiert ist. Als Alternative zu den beschriebenen Sensoren für den Bahnlauf findet eine grundsätzlich ebenfalls geeignete Sensoreinheit regelmäßig Anwendung unmittelbar nach einer Druckeinheit, mit welcher das Druckbild auf die Bahn aufgedruckt wird, um ebenjenes Druckbild zu überprüfen. Eine entsprechende Sensoreinheit ist auch für die Erkennung der Druckmerkmale geeignet, ist hierzu dann jedoch möglichst nah an der Schneid-/Rilleinheit positioniert.

Zur Erzeugung von Schnitten und/oder Rillen an den Bearbeitungspositionen weist die Schneid-/Rilleinheit mehrere Bearbeitungskörper auf. Diese Bearbeitungskörper sind entlang der Querrichtung angeordnet. Die Bearbeitungskörper sind ausgebildet zur mechanischen Bearbeitung der Bahn, um in diese Schnitte und/oder Rillen durch eine mechanische Einwirkung einzubringen. Ein jeweiliger Bearbeitungskörper weist z.B. ein Walzenpaar mit zwei Walzen und jeweils einem Schneidmesser oder einer Rillkontur auf. Vorliegend sind die Bearbeitungskörper relativ zueinander verstellbar und die Schneid-/Rilleinheit wird dadurch eingestellt, dass die Bearbeitungskörper relativ zueinander verstellt werden. Mit anderen Worten: die Bearbeitungspositionen werden dadurch skaliert und an das Druckbild angepasst, dass die Bearbeitungskörper entsprechend relativ zueinander verstellt werden, z.B. deren Abstand in Querrichtung geeignet vergrößert oder verringert wird.

In einer bevorzugten Ausgestaltung sind die Bearbeitungskörper zur Parallelpositionierung ausgebildet und hierzu separat voneinander verstellbar. Insbesondere weist die Schneid-/Rilleinheit für jeden der Bearbeitungskörper einen eigenen Verstellmechanismus (z.B. jeweils mit einer Spindel) auf und die Verstellmechanismen sind unabhängig voneinander steuerbar. Dies steht im Gegensatz zu einer seriellen Positionierung, welche für das hier beschriebene Verfahren typischerweise ungeeignet ist, da hierbei lediglich ein einzelner Verstellmechanismus für mehrere Bearbeitungskörper verwendet wird.

Die erfindungsgemäße Anlage dient zur Bearbeitung einer Bahn, welche mit einem Druckbild bedruckt ist. Die Anlage weist eine Schneid-/Rilleinheit auf, welcher die Bahn zugeführt wird, um diese an einer Anzahl von Bearbeitungspositionen in Längsrichtung zu bearbeiten. Stromauf der Schneid-/Rilleinheit weist die Bahn eine Ist-Breite auf. Die Anlage weist weiterhin eine Sensoreinheit auf, welche ausgebildet ist zur Messung eines Ist-Maßes für die Ist-Breite, und außerdem eine Steuereinheit, welche ausgebildet ist, aus dem Ist-Maß zusammen mit einem Soll-Maß einen Skalierungsfaktor zu ermitteln, um die Bearbeitungspositionen an die Ist-Breite anzupassen. Die Steuereinheit ist dann weiter ausgebildet, die Schneid-/Rilleinheit abhängig vom Skalierungsfaktor derart einzustellen, dass die Bearbeitungspositionen an das Druckbild angepasst werden. Für die Anlage gelten die Ausführungen weiter oben analog.

Nachfolgend werden Ausführungsbeispiele der Erfindung anhand einer Zeichnung näher erläutert. Darin zeigen jeweils schematisch:
- Fig. 1: eine Anlage,
- Fig. 2: ein Ablaufdiagramm für ein Verfahren,
- Fig. 3: ein Bahn mit Druckbild,
- Fig. 4: die Bahn aus Fig. 3 nach einer Dimensionsänderung,
- Fig. 5: die Bahn aus Fig. 4, nach einer Anpassung von Bearbeitungspositionen an das Druckbild,
- Fig. 6: ein Abstand zwischen zwei Druckmerkmalen als ein Ist-Maß,
- Fig. 7: eine Schneid-/Rilleinheit der Anlage aus Fig. 1.

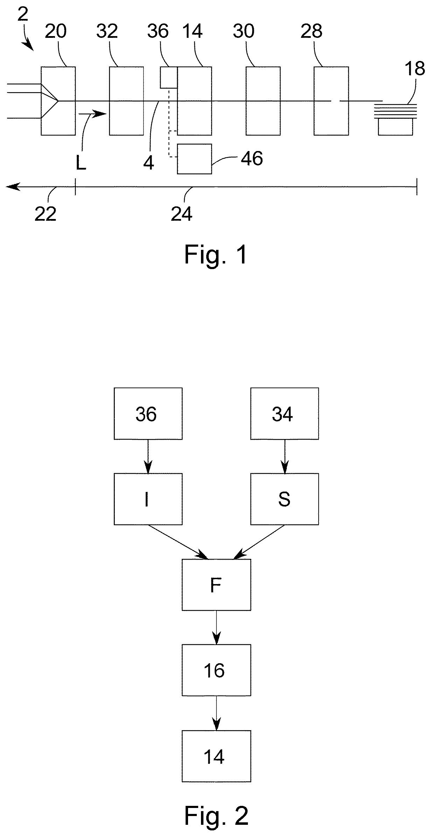

In Fig. 1 ist ein Ausführungsbeispiel für eine Anlage 2 zur Bearbeitung einer Bahn 4 gezeigt. Die Bahn 4 ist mit einem Druckbild 6 bedruckt, welches alles umfasst, was auf die Bahn 4 aufgedruckt ist (z.B. Bilder, Logos 8, Verzierungen 10, Schriftzüge, Steuercodes 12, Justiermarken etc.). Das Bedrucken ist nicht zwingend Teil des hier beschriebenen Verfahrens zur Bearbeitung der Bahn 4. Im gezeigten Ausführungsbeispiel ist die Bahn 4 aus Papier hergestellt und eine Wellpappenbahn und somit mehrlagig. Die Anlage 2 ist hier beispielhaft eine Wellpappenanlage, die nachfolgenden Ausführungen gelten jedoch analog auch für andere Anlagen 2 und Bahnen 4. In jedem Fall erfolgt die hier beschriebene Bearbeitung der Bahn 4 nach dem Aufdrucken des Druckbilds 6, d.h. bei der Bearbeitung liegt ein Preprint vor.

Die Bahn 4 wird einer Schneid-/Rilleinheit 14 der Anlage 2 zugeführt und mittels der Schneid-/Rilleinheit 14 wird die Bahn 4 an einer Anzahl von Bearbeitungspositionen 16 (d.h. Schnitt- und/oder Rillpositionen) in Längsrichtung L bearbeitet. Die Schneid-/Rilleinheit 14 bringt in die Bahn 4 einen oder mehrere Schnitte und/oder Rillen ein. Nachfolgend wird ohne Beschränkung der Allgemeinheit von einer Schneid- und Rilleinheit 14 ausgegangen, mit welcher die Bahn 4 sowohl geschnitten als auch gerillt wird. Die Längsrichtung L entspricht einer Förderrichtung der Bahn 4 durch die Anlage 2. Die Bearbeitungspositionen 16 sind entsprechend diejenigen Positionen entlang der Bahn 4, an welchen von der Schneid-/Rilleinheit 14 ein oder mehrere Schnitte und/oder Rillen eingebracht werden, welche zur Konfektionierung der Wellpappenbahn in einzelne Nutzen 26 und zur Ausbildung von Bruch-, Falz- oder Knickkanten der Nutzen 26 und späterer Bögen 18 dienen.

In der hier gezeigten Ausgestaltung ist die Schneid-/Rilleinheit 14 stromab eines sogenannten Double-Facers 20 angeordnet, in welchem mehrere Zwischenprodukte für die Wellpappenbahn zur tatsächlichen Wellpappenbahn zusammengesetzt werden. Der Double-Facer 20 markiert auch das Ende eines sogenannten "Wet Ends" 22 der Anlage 2, woran sich ein sogenanntes "Dry End" 24 anschließt, mit welchem eine Konfektionierung der Bahn 4 in die einzelnen Nutzen 26 und schließlich Bögen 18 erfolgt. Die Schneid-/Rilleinheit 14 ist ein Teil des Dry Ends 24. Vorliegend wird die Bahn 4 mit der Schneid-/Rilleinheit 14 in mehrere voneinander getrennte Teilbahnen (d.h. die Nutzen 26) zerschnitten. Stromab der Schneid-/Rilleinheit 14 weist die Anlage 2 hier noch einen Querschneider 28 auf, welcher die Teilbahnen in Querrichtung Q zerschneidet und damit in einzelne Bögen 18 unterteilt. Optional ist zwischen Schneid-/Rilleinheit 14 und Querschneider 28 noch ein Aufteiler 30 angeordnet. Weiter optional ist zwischen dem Double-Facer 20 und der Schneid-/Rilleinheit 14 ein Kurzquerschneider 32 angeordnet.

Stromauf der Schneid-/Rilleinheit 14 weist die Bahn 4 eine Ist-Breite B auf, kurz auch lediglich als Breite bezeichnet. Die Ist-Breite B ist die tatsächliche Breite der Bahn 4 und wird in Querrichtung Q gemessen. Im Rahmen des Verfahrens wird ein Ist-Maß I für die Ist-Breite B gemessen und aus diesem zusammen mit einem Soll-Maß S ein Skalierungsfaktor F ermittelt wird, um die Bearbeitungspositionen 16 an die Ist-Breite I anzupassen. Die Schneid-/Rilleinheit 14 wird dann abhängig vom Skalierungsfaktor F derart eingestellt, dass die Bearbeitungspositionen 16 an das Druckbild 6 angepasst sind. Dies ist beispielhaft im Ablaufdiagramm der Fig. 2 gezeigt. Die Schneid-/Rilleinheit 14 ist demnach einstellbar und wird automatisch derart abhängig von der Ist-Breite B (mittels des Ist-Maßes I) eingestellt, dass die Schnitte und/oder Rillen immer exakt zum Druckbild 6 passen. Hierzu werden die Bearbeitungspositionen 16, d.h. das Layout der Schnitte und/oder Rillen, mit dem Skalierungsfaktor F skaliert. Eine Variation der Ist-Breite und damit eine eigentlich ungewollte Skalierung des Druckbilds 6 wird demnach durch eine entsprechende Skalierung der Schneid-/Rilleinheit 14 kompensiert.

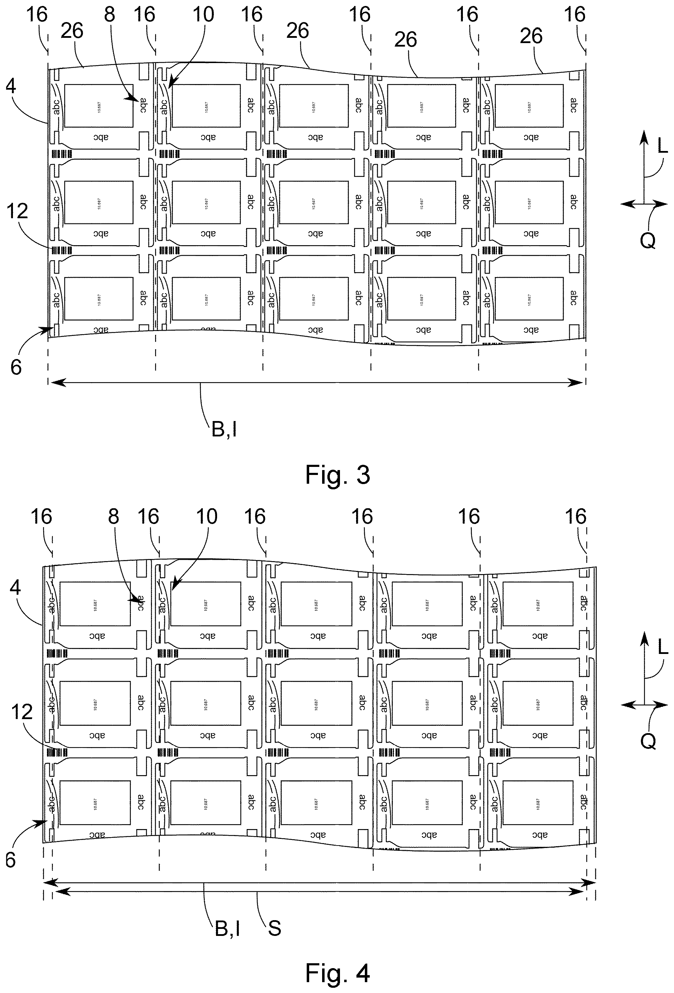

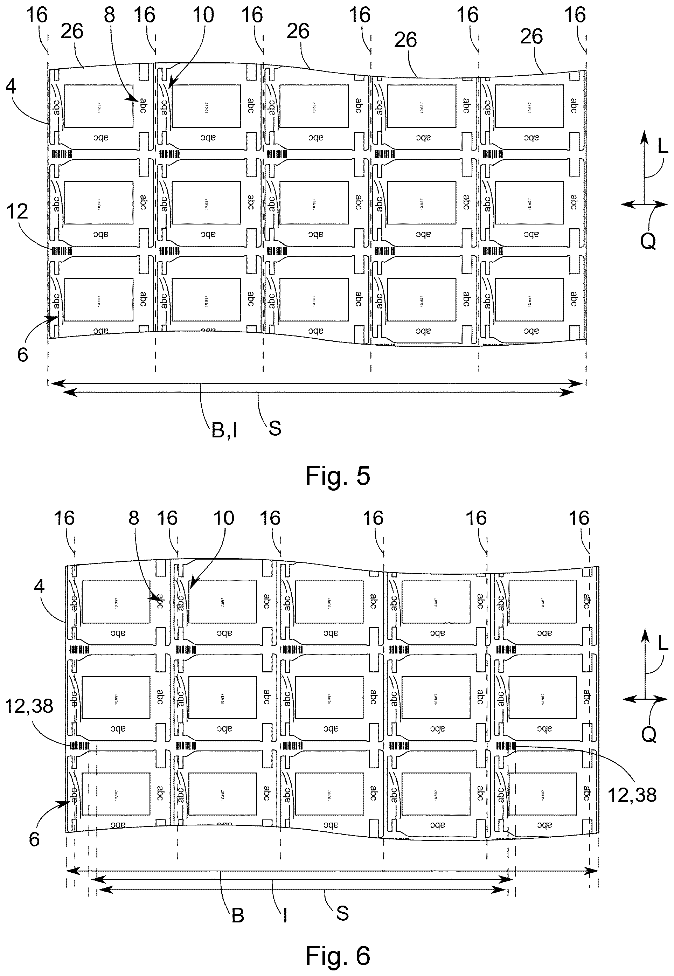

Insgesamt werden die Bearbeitungspositionen 16 der Schneid-/Rilleinheit 14 an das tatsächliche Druckbild 6 angepasst, wobei eine sich ergebende Abweichung der tatsächlichen Abmessungen der Nutzen 26 von dem vorgegebenen Soll-Maß S aus Auftragsdaten 34 akzeptiert wird. Dies steht im Gegensatz zum umgekehrten Ansatz einer Anpassung des Druckbilds 6 an feststehende Bearbeitungspositionen 16, d.h. einer Positionierung der Schnitte und/oder Rillen exakt wie in den Auftragsdaten 34 vorgegeben. In diesem Fall würden Schnitte und/oder Rillen regelmäßig nicht mehr zum Druckbild 6 passen. Dies ist beispielhaft in den Fig. 3 - 5 illustriert, welche jeweils die Bahn 4 und die Bearbeitungspositionen 16 in einer Draufsicht auf die Bahn 4 zeigen. Dort wird die Bahn 4 mit der Schneid-/Rilleinheit 14 in fünf gleichartige Teilbahnen zerteilt, d.h. das Druckbild 6 weist in Querrichtung Q nebeneinander fünf gleichartige Bilder auf, welche entsprechend voneinander zu trennen sind und in den Auftragsdaten 34 ist als Soll-Maß S eine bestimmte Breite vorgegeben. Dieser Idealfall ist in Fig. 3 gezeigt, dort passt das Soll-Maß S zum Druckbild 6. Auf ihrem Lauf zur Schneid-/Rilleinheit 14 erfährt die Bahn 4 jedoch eine unerwartete Dimensionsänderung, z.B. schrumpft die Bahn 4 weniger als erwartet, und weist nun eine Ist-Breite B auf, welche größer ist als eine Soll-Breite, welche sich aus dem Soll-Maß S ergibt (und gegebenenfalls einer antizipierten Dimensionsänderung, welche aber tatsächlich nicht erfolgt). Dies ist in Fig. 4 gezeigt und führt beim Zerteilen dazu, dass Teile des Bildes des einen Nutzen 26 auf dem benachbarten Nutzen 26 liegen. Betrachtet man z.B. einen fertig zu einer Faltschachtel geformten, einzelnen Bogen 18, so wirkt das Druckbild 6 entsprechend verschoben relativ zu den Kanten und Rändern der Faltschachtel, d.h. Bildkante und Schnittkante passen nicht zusammen. Da die Bahn 4 typsicherweise wie in den Fig. 3 - 5 gezeigt mittig ausgerichtet in die Schneid-Rilleinheit 14 geführt wird, wächst der entsprechende Fehler in Querrichtung Q nach außen hin an, wie in Fig. 4 deutlich zu erkennen ist. Die hier beschriebene Skalierung der Bearbeitungspositionen 16 an das tatsächliche Druckbild 6 durch entsprechende Einstellung der Schneid-/Rilleinheit 14 abhängig vom Skalierungsfaktor F und ausgehend von Fig. 4 ist dann in Fig. 5 gezeigt, dort passen Schnitte und Rillen wieder optimal zum Druckbild 6.

Zusätzlich zur beschriebenen Anpassung der Bearbeitungspositionen 16 an das Druckbild 6 wird vorliegend auch eine antizipierte Dimensionsänderung der Bahn 4 berücksichtigt. Entsprechend wird bei dem Verfahren eine Dimensionsänderung der Bahn 4 bei deren Verarbeitung innerhalb der Anlage 2 im Voraus abgeschätzt (antizipiert) und dadurch berücksichtigt, dass das Druckbild 6 skaliert, z.B. vergrößert, aufgedruckt wird, sodass dann durch die bereits beschriebene Anpassung der Bearbeitungspositionen 16 an das Druckbild 6 eine Variation der abgeschätzten Dimensionsänderung ausgeglichen wird. Die abgeschätzte Dimensionsänderung ist vor allem eine erwartete Dimensionsänderung, welche im weiteren Lauf der Bahn 4 durch die Anlage 2 tatsächlich nicht zwingend vollständig passiert, sodass trotz dieser Berücksichtigung dann an der Schneid-/Rilleinheit die in Fig. 4 gezeigt Situation entsteht. Dies ergibt sich aus Variationen gegenüber der abgeschätzten Dimensionsänderung. Das hier beschriebene Verfahren enthält somit vorteilhaft zwei Ausgleichsmechanismen für etwaige Dimensionsänderungen der Bahn 4, nämlich einerseits für eine abgeschätzte Dimensionsänderung und andererseits für eine tatsächliche Dimensionsänderung, speziell eine Variation (oder Abweichung) gegenüber der abgeschätzten Dimensionsänderung. Erstens wird das Druckbild 6 selbst von vornherein abhängig von der antizipierten Dimensionsänderung skaliert, z.B. werden Soll-Maße S des Druckbilds 6 mit einem entsprechenden Skalierungsfaktor (nicht der bereits genannte Skalierungsfaktor F) multipliziert. Die antizipierte Dimensionsänderung beruht regelmäßig auf Erfahrungswerten, welche vom konkreten Auftrag und dem verwendeten Papier abhängen und berücksichtigt typischerweise keine Variationen im Betrieb, d.h. keine dynamische Dimensionsänderung, welche sich z.B. durch eine variierende Bahngeschwindigkeit ergibt oder durch Abweichungen beim Trocknen oder Befeuchten der Bahn 4. Speziell eine solche Dimensionsänderung wird nun durch das hier beschriebene Verfahren berücksichtigt, denn mit der Messung des Ist-Maßes I wird genau eine solche Dimensionsänderung erfasst und dann durch Skalierung der Bearbeitungspositionen 16 dynamisch und in Echtzeit automatisch kompensiert. Damit ist insgesamt eine zweistufige Korrektur realisiert, bei welcher in einer ersten Stufe eine erste, grobe, statische Korrektur erfolgt, indem das Druckbild 6 im Vorfeld an die antizipierte Dimensionsänderung angepasst wird, und dann in einer zweiten Stufe eine zweite, feine, dynamische Korrektur, indem die Bearbeitungspositionen 16 wie im Zusammenhang mit Fig. 5 beschrieben an das Druckbild 6 angepasst werden.

Der Skalierungsfaktor F wird aus dem Ist-Maß I und dem Soll-Maß S gebildet, z.B. einfach als Verhältnis von Ist-Maß I zu Soll-Maß S oder auf andere, geeignete Weise. Das Soll-Maß S ist den Auftragsdaten 34 zur Bearbeitung der Bahn 5 entnommen und typischerweise vom Kunden vorgegeben. Das Soll-Maß S ist ein Maß dafür, welche Abmessungen die einzelnen Nutzen 26 oder Bögen 18 am Ende aufweisen sollen, z.B. einfach die Summe der Breiten der Teilbahnen 26, falls das Ist-Maß I einfach die Breite B der gesamten Bahn ist. Das Soll-Maß S gibt auch die Bearbeitungspositionen 16 vor, welche nun in dem hier beschriebenen Verfahren skaliert werden, um an das tatsächliche Druckbild 6 angepasst zu werden.

Für eine möglichst optimale Anpassung der Bearbeitungspositionen 16 an das Druckbild 6 wird das Ist-Maß I möglichst nah an der Schneid-/Rilleinheit 14 gemessen, z.B. höchstens 10 m oder sogar nur höchstens 1 m stromauf der Schneid-/Rilleinheit 14. Grundsätzlich sind für das Ist-Maß I verschiedene Ausgestaltungen möglich und geeignet, wesentlich ist, dass dieses Rückschlüsse auf die Ist-Breite B und somit auf die Abmessungen des tatsächlichen Druckbilds 6 zulässt.

In einer ersten möglichen Ausgestaltung ist das Ist-Maß I einfach die Ist-Breite B der Bahn 4. Das Ist-Maß I wird beispielsweise mit einer Bahnbreiten- oder Bahnkantenerkennung gemessen, hierzu weist die Anlage 2 eine entsprechende Sensoreinheit 36 auf. In einer zweiten möglichen Ausgestaltung ist das Ist-Maß I ein Abstand zwischen zwei Druckmerkmalen 38 des Druckbildes 6, z.B. wie in Fig. 6 gezeigt. In dieser Ausgestaltung wird demnach direkt das Druckbild 6 analysiert, um eine etwaige Dimensionsänderung der Bahn 4 und des Druckbilds 6 zu erkennen. Welche Druckmerkmale 38 konkret verwendet werden, ist zunächst nebensächlich. Diese liegen jedoch entlang der Breite B der Bahn 4 möglichst weit auseinander, d.h. dass zwischen den zwei Druckmerkmalen 38 in Querrichtung Q ein möglichst großer Abstand liegt. In Fig. 6 beträgt der Abstand wenigstens 50 % der Breite B und die zwei Druckmerkmale 38 liegen sogar auf unterschiedlichen Teilbahnen 26, speziell auf den beiden äußersten Teilbahnen 26.

Als Druckmerkmale 38 eigenen sich grundsätzlich alle Merkmale, welche in dem Druckbild 6 vorhanden sind, beispielsweise die bereits genannten Logos 8, Verzierungen 10 und Steuercodes 12 und generell solche Druckmerkmale 38, welche bereits ohnehin vorhanden sind und dann nicht extra zusätzlich aufgedruckt werden müssen, beispielsweise die Steuercodes 12 für den nachfolgenden Querschneider 28.

Das Ist-Maß I wird vorliegend mittels zweier Sensoren bestimmt, welche zugleich auch die Schneid-/Rilleinheit 14 insgesamt relativ zum Bahnlauf in die Schneid-/Rilleinheit 14 einstellen. Der Bahnlauf bezeichnet die Position der Bahn 4 relativ zur Querrichtung Q. Die beiden Sensoren sind Teil der Sensoreinheit 36 und dienen der Nachführung der Schneid-/Rilleinheit 14, um die Bearbeitungspositionen 16 insgesamt und zunächst unabhängig von einer Dimensionsänderung an den generellen Bahnlauf anzupassen. Hierzu wird mit den Sensoren der Bahnlauf gemessen und dann abhängig davon die Schneid-Rilleinheit 14 in Querrichtung Q korrekt positioniert. Außerdem wird nun mit diesen zwei Sensoren zusätzlich auch das Ist-Maß I gemessen. Entsprechend sind die Sensoren zur Erkennung der genannten Druckmerkmale 38 oder der Breite B ausgebildet.

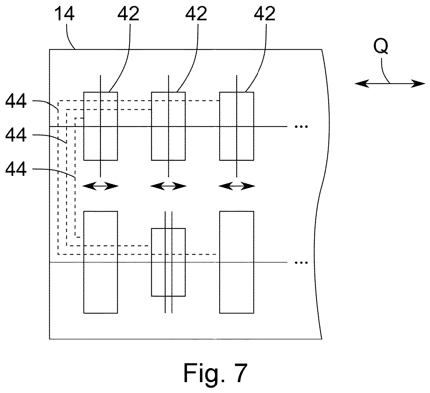

Zur Erzeugung von Schnitten und/oder Rillen an den Bearbeitungspositionen 16 weist die Schneid-/Rilleinheit 14 mehrere Bearbeitungskörper 42 auf, beispielsweise wir in Fig. 7 dargestellt. Diese Bearbeitungskörper 42 sind entlang der Querrichtung Q angeordnet und ausgebildet zur mechanischen Bearbeitung der Bahn 4, um in diese Schnitte und/oder Rillen durch eine mechanische Einwirkung einzubringen. Ein jeweiliger Bearbeitungskörper 42 weist z.B. ein Walzenpaar mit zwei Walzen und jeweils einem Schneidmesser oder einer Rillkontur auf. Die Bearbeitungskörper 42 sind relativ zueinander verstellbar und die Schneid-/Rilleinheit 14 wird dadurch eingestellt, dass die Bearbeitungskörper 42 relativ zueinander verstellt werden. Mit anderen Worten: die Bearbeitungspositionen 16 werden dadurch skaliert und an das Druckbild 6 angepasst, dass die Bearbeitungskörper 42 entsprechend relativ zueinander verstellt werden, z.B. deren Abstand in Querrichtung Q geeignet vergrößert oder verringert wird. In Fig. 7 sind die Bearbeitungskörper 42 zur Parallelpositionierung ausgebildet und hierzu separat voneinander verstellbar. Die Schneid-/Rilleinheit 14 weist für jeden der Bearbeitungskörper 42 einen eigenen Verstellmechanismus 44 (z.B. jeweils mit einer Spindel) auf und die Verstellmechanismen 44 sind unabhängig voneinander steuerbar. Dies steht im Gegensatz zu einer seriellen Positionierung, bei welchem lediglich ein einzelner Verstellmechanismus für mehrere Bearbeitungskörper 42 verwendet wird.

Die Anlage 2 weist auch eine Steuereinheit 46 auf, welche ausgebildet ist, aus dem Ist-Maß I zusammen mit dem Soll-Maß S den Skalierungsfaktor F zu ermitteln, um die Bearbeitungspositionen 16 dann wie beschrieben an die Ist-Breite B anzupassen. Die Steuereinheit 46 ist dann weiter ausgebildet, wie beschrieben die Schneid-/Rilleinheit 14 abhängig vom Skalierungsfaktor F derart einzustellen, dass die Bearbeitungspositionen 16 an das Druckbild 6 angepasst werden.

### Bezugszeichenliste

- 2: Anlage
- 4: Bahn
- 6: Druckbild
- 8: Logo
- 10: Verzierung
- 12: Steuercode
- 14: Schneid-/Rilleinheit
- 16: Bearbeitungsposition
- 18: Bogen
- 20: Double-Facer
- 22: Wet End
- 24: Dry End
- 26: Nutzen (Teilbahn)
- 28: Querschneider
- 30: Aufteiler
- 32: Kurzquerschneider
- 34: Auftragsdaten
- 36: Sensoreinheit
- 38: Druckmerkmal
- 42: Bearbeitungskörper
- 44: Verstellmechanismus
- 46: Steuereinheit
- B: Ist-Breite
- F: Skalierungsfaktor
- I: Ist-Maß
- L: Längsrichtung
- Q: Querrichtung
- S: Soll-Maß

## Patentansprüche

1. Verfahren zur Bearbeitung einer Bahn (4), welche mit einem Druckbild (6) bedruckt ist,
- wobei die Bahn (4) einer Schneid-/Rilleinheit (14) zugeführt wird, mittels welcher die Bahn (4) an einer Anzahl von Bearbeitungspositionen (16) in Längsrichtung (L) bearbeitet wird,
- wobei die Bahn (4) stromauf der Schneid-/Rilleinheit (14) eine Breite (B) aufweist,
- wobei ein Ist-Maß (I) für die Breite (B) gemessen wird,
- wobei die Schneid-/Rilleinheit (14) abhängig vom Ist-Maß (I) und einem Soll-Maß (S) für die Breite (B) derart eingestellt wird, dass die Bearbeitungspositionen (16) an das Druckbild (6) angepasst werden, **dadurch gekennzeichnet,**
- **dass** die Schneid-/Rilleinheit (14) zur Erzeugung von Schnitten und/oder Rillen mehrere Bearbeitungskörper (42) aufweist, welche entlang einer Querrichtung (Q), d.h. senkrecht zur Längsrichtung (L), angeordnet und relativ zueinander verstellbar sind,
- **dass** die Schneid-/Rilleinheit (14) dadurch eingestellt wird, dass die Bearbeitungskörper (42) relativ zueinander verstellt werden.

2. Verfahren nach Anspruch 1,
wobei eine Dimensionsänderung der Bahn (4) bei deren Verarbeitung im Voraus abgeschätzt wird und dadurch berücksichtigt wird, dass das Druckbild (6) skaliert aufgedruckt wird, sodass durch die Anpassung der Bearbeitungspositionen an (16) das Druckbild (6) eine Variation der abgeschätzten Dimensionsänderung ausgeglichen wird.

3. Verfahren nach Anspruch 1 oder 2,
wobei eine Skalierung des Druckbilds (6) abhängig vom Ist-Maß (I) auf das Soll-Maß (S) geregelt wird, sodass das Druckbild (6) auf das Soll-Maß (S) angepasst wird.

4. Verfahren nach einem der Ansprüche 1 bis 3,
wobei das Ist-Maß (I) höchstens 10 m stromauf der Schneid-/Rilleinheit (14) gemessen wird.

5. Verfahren nach einem der Ansprüche 1 bis 4,
wobei das Ist-Maß (I) ein Abstand zwischen zwei Druckmerkmalen (38) des Druckbildes (6) ist.

6. Verfahren nach einem der Ansprüche 1 bis 5,
wobei das Ist-Maß (I) die Breite (B) ist.

7. Verfahren nach einem der Ansprüche 1 bis 6,
wobei das Ist-Maß (I) mittels zweier Sensoren bestimmt wird, welche zugleich auch die Schneid-/Rilleinheit (14) insgesamt relativ zum Bahnlauf in die Schneid-/Rilleinheit (14) einstellen.

8. Verfahren nach einem der Ansprüche 1 bis 7,
wobei die Bearbeitungskörper (42) zur Parallelpositionierung ausgebildet sind und hierzu separat voneinander verstellbar sind.

9. Verfahren nach einem der Ansprüche 1 bis 8,
wobei die Bahn (4) eine Wellpappenbahn ist.

10. Anlage (2) zur Bearbeitung einer Bahn (4), welche mit einem Druckbild (6) bedruckt ist,
- mit einer Schneid-/Rilleinheit (14), welcher die Bahn (4) zugeführt wird, um diese an einer Anzahl von Bearbeitungspositionen (16) in Längsrichtung (L) zu bearbeiten,
- wobei die Bahn (4) stromauf der Schneid-/Rilleinheit (14) eine Breite (B) aufweist,
- mit einer Sensoreinheit (36), welche ausgebildet ist zur Messung eines Ist-Maßes (I) für die Breite (B),
- mit einer Steuereinheit (46), welche ausgebildet ist, die Schneid-/Rilleinheit (14) abhängig vom Ist-Maß (I) und einem Soll-Maß (S) für die Breite (B) derart einzustellen, dass die Bearbeitungspositionen (16) an das Druckbild (6) angepasst werden,
**dadurch gekennzeichnet,**
- **dass** die Schneid-/Rilleinheit (14) zur Erzeugung von Schnitten und/oder Rillen mehrere Bearbeitungskörper (42) aufweist, welche entlang einer Querrichtung (Q), d.h. senkrecht zur Längsrichtung (L), angeordnet und relativ zueinander verstellbar sind,
- **dass** die Schneid-/Rilleinheit (14) dadurch eingestellt wird, dass die Bearbeitungskörper (42) relativ zueinander verstellt werden.

## Claims

1. Method for processing a web (4) which is printed with a print image (6),
- wherein the web (4) is fed to a slitting/creasing unit (14) by means of which the web (4) is processed at a number of processing positions (16) in the longitudinal direction (L),
- wherein the web (4) has a width (B) upstream of the slitting/creasing unit (14),
- wherein an actual dimension (I) for the width (B) is measured,
- wherein the slitting/creasing unit (14) is set according to the actual dimension (I) and a target dimension (S) for the width (B) in such a way that the processing positions (16) are adapted to the print image (6),
**characterized**
- **in that**, for producing slits and/or creases, the slitting/creasing unit (14) has multiple machining bodies (42) which are arranged along a transverse direction (Q), that is to say perpendicularly to the longitudinal direction (L), and are adjustable relative to one another,
- **in that** the slitting/creasing unit (14) is set by the machining bodies (42) being adjusted relative to one another.

2. Method according to Claim 1,
wherein a dimensional change of the web (4) during the processing thereof is estimated in advance, and is taken into account by the print image (6) being printed in a scaled manner such that a variation of the estimated dimensional change is compensated by adapting the processing positions (16) to the print image (6).

3. Method according to Claim 1 or 2,
wherein scaling of the print image (6) is adjusted by regulation in relation to the target dimension (S) according to the actual dimension (I), so that the print image (6) is adapted to the target dimension (S).

4. Method according to one of Claims 1 to 3,
wherein the actual dimension (I) is measured at most 10 m upstream of the slitting/creasing unit (14).

5. Method according to one of Claims 1 to 4,
wherein the actual dimension (I) is a distance between two printing features (38) of the print image (6).

6. Method according to one of Claims 1 to 5,
wherein the actual dimension (I) is the width (B).

7. Method according to one of Claims 1 to 6,
wherein the actual dimension (I) is determined by means of two sensors which, at the same time, also set the slitting/creasing unit (14) overall relative to the web course into the slitting/creasing unit (14).

8. Method according to one of Claims 1 to 7,
wherein the machining bodies (42) are configured for parallel positioning and, for this purpose, are adjustable separately from one another.

9. Method according to one of Claims 1 to 8,
wherein the web (4) is a corrugated-cardboard web.

10. Installation (2) for processing a web (4) which is printed with a print image (6),
- having a slitting/creasing unit (14) to which the web (4) is fed in order for said web to be processed at a number of processing positions (16) in the longitudinal direction (L),
- wherein the web (4) has a width (B) upstream of the slitting/creasing unit (14),
- having a sensor unit (36) which is configured for measuring an actual dimension (I) for the width (B),
- having a control unit (46) which is configured to set the slitting/creasing unit (14) according to the actual dimension (I) and a target dimension (S) for the width (B) in such a way that the processing positions (16) are adapted to the print image (6),
**characterized**
- **in that**, for producing slits and/or creases, the slitting/creasing unit (14) has multiple machining bodies (42) which are arranged along a transverse direction (Q), that is to say perpendicularly to the longitudinal direction (L), and are adjustable relative to one another,
- **in that** the slitting/creasing unit (14) is set by the machining bodies (42) being adjusted relative to one another.

## Revendications

1. Procédé d'usinage d'une bande (4), qui est imprimée avec une image imprimée (6),
- la bande (4) étant amenée à une unité de coupe/rainurage (14), au moyen de laquelle la bande (4) est usinée sur un certain nombre de positions d'usinage (16) dans la direction longitudinale (L),
- la bande (4) présentant une largeur (B) en amont de l'unité de coupe/rainurage (14),
- une dimension réelle (I) de la largeur (B) étant mesurée,
- l'unité de coupe/rainurage (14) étant réglée en fonction de la dimension réelle (I) et d'une dimension de consigne (S) de la largeur (B) de telle manière que les positions d'usinage (16) sont adaptées à l'image imprimée (6),
**caractérisé en ce**
- **que** l'unité de coupe/rainurage (14) destinée à réaliser des découpes et/ou rainures comporte plusieurs corps d'usinage (42), qui sont disposés le long d'une direction transversale (Q), c'est-à-dire perpendiculairement à la direction longitudinale (L), et peuvent être ajustés les uns par rapport aux autres,
- **que** l'unité de coupe/rainurage (14) est réglée en ce que les corps d'usinage (42) sont ajustés les uns par rapport aux autres.

2. Procédé selon la revendication 1,
une modification de dimension de la bande (4) étant estimée à l'avance pendant son traitement et étant prise en compte en ce que l'image imprimée (6) est imprimée à l'échelle, si bien qu'une variation de la modification de dimension estimée est compensée par l'adaptation des positions d'usinage (16) à l'image imprimée (6).

3. Procédé selon la revendication 1 ou 2,
une mise à l'échelle de l'image imprimée (6) étant réglée sur la dimension de consigne (S) en fonction de la dimension réelle (I), si bien que l'image imprimée (6) est adaptée à la dimension de consigne (S).

4. Procédé selon l'une des revendications 1 à 3,
la dimension réelle (I) étant mesurée au maximum à 10 m en amont de l'unité de coupe/rainurage (14).

5. Procédé selon l'une des revendications 1 à 4,
la dimension réelle (I) étant une distance entre deux caractéristiques d'impression (38) de l'image imprimée (6).

6. Procédé selon l'une des revendications 1 à 5,
la dimension réelle (I) étant la largeur (B).

7. Procédé selon l'une des revendications 1 à 6,
la dimension réelle (I) étant déterminée au moyen de deux capteurs qui règlent simultanément également l'unité de coupe/rainurage (14) dans son ensemble par rapport au défilement de la bande dans l'unité de coupe/rainurage (14).

8. Procédé selon l'une des revendications 1 à 7,
les corps d'usinage (42) étant formés pour être positionnés parallèlement et pouvant être ajustés à cet effet séparément les uns des autres.

9. Procédé selon l'une des revendications 1 à 8,
la bande (4) étant une bande de carton ondulé.

10. Installation (2) d'usinage d'une bande (4), qui est imprimée avec une image imprimée (6),
- avec une unité de coupe/rainurage (14), à laquelle la bande (4) est amenée pour usiner celle-ci sur un certain nombre de positions d'usinage (16) dans la direction longitudinale (L),
- la bande (4) présentant une largeur (B) en amont de l'unité de coupe/rainurage (14),
- avec une unité de détection (36), qui est formée pour mesurer une dimension réelle (I) de la largeur (B),
- avec une unité de commande (46) qui est formée pour régler l'unité de coupe/rainurage (14) en fonction de la dimension réelle (I) et d'une dimension de consigne (S) de la largeur (B) de telle manière que les positions d'usinage (16) sont adaptées à l'image imprimée (6), **caractérisée en ce**
- **que** l'unité de coupe/rainurage (14) destinée à réaliser des découpes et/ou rainures comporte plusieurs corps d'usinage (42), qui sont disposés le long d'une direction transversale (Q), c'est-à-dire perpendiculairement à la direction longitudinale (L), et peuvent être ajustés les uns par rapport aux autres,
- **que** l'unité de coupe/rainurage (14) est réglée en ce que les corps d'usinage (42) sont ajustés les uns par rapport aux autres.
